# EUROPÄISCHE PATENTSCHRIFT

(11) **EP 4 214 542 B1**
(45) Veröffentlichungstag und Bekanntmachung des Hinweises auf die Patenterteilung: **13.08.2025**
(21) Anmeldenummer: 21772765.0
(22) Anmeldetag: 02.09.2021
(51) Int. Cl.: G01S 7/52, G01S 15/04, G01S 15/10, G01S 15/46, G01S 15/931, G01S 7/521, G01S 15/87

(54) **ÜBERPRÜFEN EINER POSITIONIERUNG EINES ULTRASCHALLSENSORS AN EINEM FAHRZEUG**
CHECKING THE POSITIONING OF AN ULTRASONIC SENSOR ON A VEHICLE
CONTRÔLE DU POSITIONNEMENT D'UN CAPTEUR À ULTRASONS SUR UN VÉHICULE

(30) Priorität: 15.09.2020 DE 102020124013
(43) Veröffentlichungstag der Anmeldung: 26.07.2023
(73) Patentinhaber: Valeo Schalter und Sensoren GmbH, 74321 Bietigheim-Bissingen (DE)
(72) Erfinder: HAAG, Fabian, 74321 Bietigheim-Bissingen (DE)
(74) Vertreter: Pothmann, Karsten
(86) Internationale Anmeldenummer: PCT/EP2021/074198
(87) Internationale Veröffentlichungsnummer: WO 2022/058172

(56) Entgegenhaltungen:
- DE-A1- 102011 120 535
- DE-A1- 102016 105 153
- DE-A1- 102018 205 048

## Beschreibung

Die vorliegende Erfindung betrifft ein Verfahren zum Überprüfen einer Positionierung eines Ultraschallsensors an einem Fahrzeug, wobei der Ultraschallsensor in einer Halterung an dem Fahrzeug montiert ist.

Auch betrifft die vorliegende Erfindung eine Sensoranordnung mit wenigstens einem Ultraschallsensor und einer Steuerungseinheit, die über eine Datenverbindung mit dem wenigstens einen Ultraschallsensor verbunden ist, wobei der wenigstens eine Ultraschallsensor in einer Halterung an dem Fahrzeug montiert ist, wobei die Sensoranordnung ausgeführt ist, das obige Verfahren zum Überprüfen einer Positionierung eines Ultraschallsensors an einem Fahrzeug durchzuführen.

Die Verwendung von Ultraschallsensoren für Fahrunterstützungssysteme von Fahrzeugen ist bei aktuellen Fahrzeugen weit verbreitet. Die Ultraschallsensoren sind beispielsweise an einem vorderen und/oder hinteren Stoßfänger des Fahrzeugs angeordnet zur Überwachung einer Umgebung des Fahrzeugs. Zusätzlich finden auch Ultraschallsensoren in Seitenbereichen der Fahrzeuge Verwendung. Sensorinformation der Sensoren kann beispielsweise in einem Nahfeldüberwachungssystem, insbesondere einem Parkassistenzsystem oder einem Totwinkelüberwachungssystem, verwendet werden.

Im Stand der Technik werden solche Ultraschallsensoren in der Regel mittels an dem Fahrzeug angeordneten oder anzuordnenden Halterungen befestigt. Dabei ist wegen der einfachen und schnellen Montage eine Rastmontage der Ultraschallsensoren in den Halterungen verbreitet.

Ausgehend davon besteht sowohl bei der Produktion als auch bei Reparaturen in einer Autowerkstatt das Risiko, dass die Ultraschallsensoren beim Einbau nicht bestimmungsgemäß mit den Raststrukturen verrastet und somit nicht korrekt in der Halterung und damit am Fahrzeug positioniert sind. Entsprechend unterscheiden sich Längsachsen des Ultraschallsensors und der dazugehörigen Halterung. Es ist nicht gewährleistet, dass sich die Ultraschallsensoren in ihrer bestimmungsgemäßen Einbaulage befinden, indem zum Beispiel ihre Elevationswinkel und/oder Azimuthwinkel inkorrekt sind. Ferner können auch Abweichungen von der bestimmungsgemäßen Einbaulage durch Kollisionen oder mutwillige Beschädigungen auftreten.

Dadurch kann einerseits ein Erfassungsbereich des falsch montierten Ultraschallsensors falsch ausgerichtet sein. Zusätzlich können an dem Ultraschallsensor Störungen auftreten, wenn eine Ultraschallmembran des falsch montierten Ultraschallsensors in ihrer Beweglichkeit eingeschränkt ist, wenn sie beispielsweise an einer Membraneinfassung der Halterung anliegt.

Als Folge von falsch montierten Ultraschallsensoren können zusätzlich zu dem oben genannten Parkassistenzsystem oder dem Totwinkelüberwachungssystem auch weitere sicherheitsrelevante Funktionen wie z.B. eine Fußgängererkennung oder ein autonomes oder teilautonomes Rangieren beeinträchtigt oder funktionslos sein können. Von besonderem Nachteil ist, dass weder der Ultraschallsensor selber noch ein Unterstützungssystem, zu dem dieser Ultraschallsensor gehört, falsch montierte Ultraschallsensoren erkennen und/oder melden können. Im Gegenteil werden der Ultraschallsensor selber wie auch das Fahrunterstützungssystem, zu dem dieser Ultraschallsensor gehört, von einem vermeintlich bestimmungsgemäßen Betrieb ausgehen.

In diesem Zusammenhang ist aus der DE 10 2010 024 205 A1 ein Ultraschallsensor, insbesondere für ein Fahrzeug, mit einem topfförmigen Gehäuse und einem Deckel, durch welchen das Gehäuse rückseitig abgedeckt ist, bekannt. Der Deckel kann dabei beispielsweise als eine Folie ausgeführt sein.

Aus der DE 10 2013 022 061 A1 ist ein Verfahren zum Herstellen eines Ultraschallsensors für ein Kraftfahrzeug bekannt, bei welchem für den Ultraschallsensor eine Membran zum Aussenden von Ultraschallsignalen in eine Senderichtung und ein Sensorgehäuse bereitgestellt werden, in und/oder an welchem die Membran befestigt wird. Das Sensorgehäuse weist eine in die Senderichtung der Membran weisende Frontseite und eine Rückseite auf, welche in eine zur Senderichtung entgegengesetzte rückwärtige Richtung weist, und wobei an der Frontseite das Sensorgehäuse mit einer frontseitigen Öffnung für die Membran ausgebildet wird, wobei die Frontseite des Sensorgehäuses mit einer aus einer Folie ausgebildeten Kappe verbunden wird, mit welcher die frontseitige Öffnung des Sensorgehäuses in die Senderichtung hin abgedeckt wird, wobei die Membran zumindest bereichsweise in eine Aufnahme der Kappe eingebracht wird und hierbei eine in die Senderichtung weisende Frontseite der Membran mit einem Boden der Aufnahme der Kappe verbunden wird.

Weiter ist aus der DE 10 2013 213 476 A1 ein Ultraschallsensor, insbesondere für ein Fahrzeug, sowie ein Verfahren zur Herstellung eines Ultraschallsensors und ein Kraftfahrzeug mit einem Ultraschallsensor bekannt. Der Ultraschallsensor umfasst ein in einem Gehäuseteil angeordnetes Wandlerelement und ein Deckelteil, wobei an dem Deckelteil eine elektronische Schaltung angeordnet ist und das Gehäuseteil mit dem Deckelteil verbindbar oder verbunden ist.

Aus der DE 10 2018 205 048 A1 ist ein Verfahren zur Funktionsüberwachung von Ultraschallsensoren bekannt, wobei eine aktuelle Amplitude eines Bodenechos mit einer erwarteten Amplitude verglichen wird.

Aus der DE 10 2011 120 535 A1 ist ein Verfahren zum Einstellen zumindest eines ersten Sensors eines Fahrzeugs bekannt, wobei die Messergebnisse zweier Sensoren verglichen werden.

Aus der DE 10 2016 105 153 A1 ist ein Verfahren zur Bestimmung der Luftfeuchtigkeit bekannt, bei welchem Ultraschallsignale mit zwei unterschiedlichen Frequenzen ausgesendet werden und die Echoamplituden ausgewertet werden.

Ausgehend von dem oben genannten Stand der Technik liegt der Erfindung somit die Aufgabe zugrunde, ein Verfahren zum Überprüfen einer Positionierung eines Ultraschallsensors an einem Fahrzeug, wobei der Ultraschallsensor in einer Halterung an dem Fahrzeug montiert ist, sowie eine Sensoranordnung mit wenigstens einem Ultraschallsensor und einer Steuerungseinheit, die über eine Datenverbindung mit dem wenigstens einen Ultraschallsensor verbunden ist, anzugeben, die eine Erkennung einer fehlerhaften Positionierung von Ultraschallsensoren ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zum Überprüfen einer Positionierung eines Ultraschallsensors an einem Fahrzeug angegeben, wobei der Ultraschallsensor in einer Halterung an dem Fahrzeug montiert ist, umfassend die Schritte Lokalisieren eines Referenzobjekts im Erfassungsbereich des Ultraschallsensors, Aussenden wenigstens eines ersten Ultraschallpulses mit dem Ultraschallsensor mit einer ersten Ultraschallfrequenz, Empfangen wenigstens eines ersten Echosignals mit dem Ultraschallsensor auf der ersten Ultraschallfrequenz, Aussenden wenigstens eines zweiten Ultraschallpulses mit dem Ultraschallsensor mit einer zweiten Ultraschallfrequenz, Empfangen wenigstens eines zweiten Echosignals mit dem Ultraschallsensor auf der zweiten Ultraschallfrequenz, Ermitteln eines Verhältnisses von Echoamplituden des Referenzobjekts in dem wenigstens einen ersten und zweiten Echosignal, und Ausgeben einer fehlerhaften Positionierung des Ultraschallsensors, wenn das Verhältnis der Echoamplituden des Referenzobjekts in dem wenigstens einen ersten und zweiten Echosignal um wenigstens einen vorgegebenen Grenzwert von einem Verhältnis für eine korrekte Positionierung des Ultraschallsensors abweicht.

Erfindungsgemäß ist außerdem eine Sensoranordnung angegeben mit wenigstens einem Ultraschallsensor und einer Steuerungseinheit, die über eine Datenverbindung mit dem wenigstens einen Ultraschallsensor verbunden ist, wobei der wenigstens eine Ultraschallsensor in einer Halterung an dem Fahrzeug montiert ist, wobei die Sensoranordnung ausgeführt ist, das obige Verfahren zum Überprüfen einer Positionierung eines Ultraschallsensors an einem Fahrzeug durchzuführen.

Grundidee der vorliegenden Erfindung ist es also, eine festgestellte Frequenzabhängigkeit des Erfassungsbereichs der Ultraschallsensoren auszunutzen, um durch die Aussendung von Ultraschallsignalen und den Empfang von entsprechenden Echosignalen mit unterschiedlichen Frequenzen unter Verwendung des Ultraschallsensors selber eine Positionierung des Ultraschallsensors zu überprüfen. Der Erfassungsbereich definiert einen Bereich, der einerseits von Ultraschallsignalen, die von dem Ultraschallsensor ausgesendet werden, erfasst wird, und aus dem andererseits Echosignale mit Echos von Objekten basierend auf den ausgesendeten Ultraschallsignalen empfangen werden können. So weist der Ultraschallsensor typischerweise einen keulenförmigen Erfassungsbereich auf, der sich üblicherweise symmetrisch um eine Sensorachse erstreckt. Die Sensorachse definiert einen Mittelbereich des Ultraschallsensors, die in einem korrekt positionierten und/oder montierten Zustand des Ultraschallsensors mit einer Mittelachse des Halters übereinstimmt. Bei hohen Frequenzen ist der Erfassungsbereich schmaler als bei niedrigen Frequenzen. Darüber hinaus sind die Amplituden von Echos durch im Erfassungsbereich befindliche Objekte bei niedrigen Frequenzen bei einer falschen Positionierung gegenüber einer korrekten Positionierung des Ultraschallsensors gedämpft. Diese Effekte lassen sich ausnutzen, um basierend auf einem Verhältnis der Echoamplituden des Referenzobjekts in dem ersten und zweiten Echosignal eine korrekte oder fehlerhafte Positionierung des Ultraschallsensors zu ermitteln. Bei einer korrekten Positionierung des Ultraschallsensors sind die Echoamplituden des Referenzobjekts in dem ersten bzw. zweiten Echosignal aufgrund einer entsprechenden Kalibrierung im Wesentlichen gleich. Eine Abweichung ergibt sich allerdings bei einer fehlerhaften Positionierung des Ultraschallsensors in der Halterung. Entsprechende Unterschiede der Amplituden lassen sich für beliebige Positionen des Referenzobjekts in dem Erfassungsbereich des Ultraschallsensors feststellen.

Die Unterschiede im Erfassungsbereich zwischen einer fehlerhaften und korrekten Positionierung des Ultraschallsensors basieren dabei auf zwei Effekten. Zunächst ist die Sensorachse aus ihrer Sollposition, die üblicherweise einer Mittelachse der Halterung entspricht, verkippt, so dass auch der Erfassungsbereich demgegenüber verkippt ist. Der Erfassungsbereich des Ultraschallsensors ist also falsch ausgerichtet. Zusätzlich treten Störungen auf, wenn eine Ultraschallmembran des falsch positionierten Ultraschallsensors in ihrer Beweglichkeit eingeschränkt ist, indem sie beispielsweise an einer Membraneinfassung der Halterung anliegt. Dies ist bei einer fehlerhaften Positionierung des Ultraschallsensors oftmals der Fall, da der Ultraschallsensor nicht korrekt in der Halterung aufgenommen ist. Dadurch kann die Form und Ausrichtung des Erfassungsbereichs weiter verändert werden. Insbesondere diese Störungen hängen in einem hohen Maße von einer Beziehung geometrischer Abmessungen und einer Ultraschallfrequenz des Ultraschallsensors ab. Insbesondere in einem Randbereich des Erfassungsbereichs hat die Frequenz einen starken Einfluss auf die Empfindlichkeit. Bei einer fehlerhaften Positionierung des Ultraschallsensors unterscheiden sich also die Echoamplituden des Referenzobjekts in den Echosignalen bei den beiden Frequenzen besonders deutlich.

Der Erfassungsbereich definiert hier einen Bereich, in dem ein Echo des Referenzobjekts empfangen werden kann. Dies beinhaltet, dass sowohl die Ultraschallsignale in den Erfassungsbereich abgestrahlt werden können, wie auch den Empfang der Echosignale mit Echos aus dem Erfassungsbereich. Der Erfassungsbereich ist jeweils auf den Ultraschallsensor bezogen und weist bei einer korrekten Positionierung des Ultraschallsensors eine andere Form und Ausrichtung auf als bei einer fehlerhaften Positionierung. Die Mittelachse der Halterung definiert üblicherweise eine Sollposition des Ultraschallsensors, d.h. eine Ausrichtung der Sensorachse auf der Mittelachse der Halterung entspricht einer korrekten Positionierung des Ultraschallsensors. Um die Echoamplituden des Referenzobjekts für die erste und zweite Ultraschallfrequenz vergleichen zu können, müssen beide Echosignale das Referenzobjekt erfassen, d.h. das Referenzobjekt muss für beide Ultraschallfrequenzen in dem Erfassungsbereich liegen.

Die Halterung des Ultraschallsensors ist üblicherweise fest an dem Fahrzeug montiert, beispielsweise an einer vorderen oder hinteren Stoßstange des Fahrzeugs oder in einem Seitenbereich davon. Der Ultraschallsensor wird dabei wegen der einfachen und schnellen Montage oftmals durch eine Rastmontage in seiner Halterung montiert und damit auch positioniert. Prinzipiell sind aber auch andere Arten der Anbringung des Ultraschallsensors in der Halterung möglich.

Die Durchführung des Verfahrens wird von der Steuerungseinheit gesteuert. Die Steuerungseinheit kann eine prinzipiell beliebige Datenverarbeitungseinrichtung sein. Im Automobilbereich werden dabei oftmals sogenannte eingebettete Systeme verwendet. Dabei findet der Begriff ECU (Electronic Control Unit) für solche Steuerungseinheiten Anwendung.

Der Ultraschallsensor ist über die Datenverbindung mit der Steuerungseinheit verbunden. Die Datenverbindung kann einen Bus umfassen, beispielsweise als DSI3-Bus, Can-Bus, Flexray oder auch als proprietäre Implementierung. Prinzipiell ist aber auch eine direkte Verbindung zwischen der Steuerungseinheit und dem Ultraschallsensor möglich.

Die Sensoranordnung kann eine prinzipiell beliebige Anzahl Ultraschallsensoren umfassen, die an beliebigen Positionen in entsprechenden Halterungen an dem Fahrzeug angeordnet sind. Verbreitet sind dabei eine Mehrzahl Ultraschallsensoren an einer Rückseite und/oder einer Vorderseite des Fahrzeugs. Zunehmend werden auch Ultraschallsensoren seitlich an Fahrzeugen angebracht. Dabei kann jeder der Ultraschallsensoren der Sensoranordnung individuell von der Steuerungseinheit angesteuert werden, um das angegebene Verfahren durchzuführen.

Das Lokalisieren eines Referenzobjekts im Erfassungsbereich des Ultraschallsensors betrifft ein Erfassen eines geeigneten Referenzobjekts in dem Erfassungsbereich. Um aufwendige Laboraufbauten zu vermeiden, können als Referenzobjekte prinzipiell beliebige Objekte angesehen werden, die sich in dem Erfassungsbereich befinden. Um das Verfahren zuverlässig durchführen zu können, wird das Referenzobjekt für die Durchführung des Verfahrens als statisch angesehen, d.h. es bewegt sich nicht relativ zu dem Fahrzeug, an dem der Ultraschallsensor angebracht ist. Üblicherweise wird das Verfahren daher auch bei einem stehenden Fahrzeug durchgeführt. Im Zuge einer Reparatur in einer Werkstatt kann aber auch ein Referenzobjekt gezielt im Erfassungsbereich positioniert werden, um das Verfahren durchzuführen.

Ausgehend davon kann das Verfahren beispielsweise in der Werkstatt gezielt durch eine Interaktion über eine Bedienschnittstelle der Steuerungseinheit gestartet werden. Alternativ kann das Verfahren in vorgegeben, beliebig berechneten oder auch zufällig ausgewählten Intervallen von der Steuerungseinheit durchgeführt werden, um die korrekte Funktion jedes verbundenen Ultraschallsensors und darüber die Funktion von übergeordneten Fahrunterstützungssystemen kontinuierlich sicherzustellen.

Die Lokalisierung des Objekts betrifft essenziell eine Erfassung eines Objekts, das als Referenzobjekt geeignet ist, d.h. das Objekt muss sich in dem Erfassungsbereich des Ultraschallsensors befinden. Dabei wird vorzugsweise von dem schmalsten Erfassungsbereich des Ultraschallsensors basierend auf den verwendeten Ultraschallfrequenzen ausgegangen. Zusätzlich kann eine Position des Referenzobjekts beispielsweise als Winkelposition des Referenzobjekts bezogen auf die Mittelachse der Halterung und/oder als Abstand zu dem Ultraschallsensor bestimmt werden. Weitere Details dazu sind untenstehend angegeben.

Für die Durchführung des Verfahrens wird der Ultraschallsensor mit zwei unterschiedlichen Ultraschallfrequenzen betrieben, d.h. mit der ersten und mit der zweiten Ultraschallfrequenz, so dass eine Ultraschallfrequenz niedriger sein muss als die andere. Es wird wenigstens ein erster Ultraschallpuls mit dem Ultraschallsensor mit einer ersten Ultraschallfrequenz ausgesendet und im Anschluss das entsprechende Echosignal mit der Echoamplitude des Referenzobjekts empfangen. Entsprechendes gilt für die zweite Ultraschallfrequenz. Durch die Verwendung der unterschiedlichen Ultraschallfrequenzen ergeben sich die unterschiedlichen Echoamplituden des Referenzobjekts in den ersten und zweiten Echosignalen.

Dabei kann jedes der Echosignale zusätzliche Echos aus der Umgebung des Ultraschallsensors enthalten, beispielsweise als Bodenechos. Diese Echos werden hier nicht weiter betrachtet und weisen oftmals Echoamplituden auf, die signifikant unterhalb der Echoamplitude des Referenzobjekts liegen.

Dabei kann der Ultraschallsensor jeweils einzelne Ultraschallpulse aussenden und die entsprechenden Echosignale empfangen, oder der Ultraschallsensor sendet jeweils Pulsfolgen einzelner Ultraschallpulse aus, und empfängt ein entsprechendes Echosignal.

Die Reihenfolge des Aussendens von ersten und zweiten Ultraschallpulsen ist prinzipiell beliebig und kann beispielsweise beim Aussenden mehreren unabhängiger Ultraschallpulse der ersten und/oder zweiten Ultraschallfrequenz in beliebiger, auch gemischter Reihenfolge durchgeführt werden. Der Ultraschallsensor wird jeweils entsprechend angepasst in seinem Frequenzverhalten, um über seine Ultraschallmembran die Ultraschallpulse auszusenden und die entsprechenden Echosignale einzukoppeln.

Das Empfangen des jeweiligen Echosignals betrifft einen Empfang von Sensorrohdaten, die in dieser Form für die weitere Verarbeitung bereitgestellt werden, um das Verhältnis der Echoamplituden des Referenzobjekts ermitteln zu können. Prinzipiell ist dabei eine Vorverarbeitung der Sensorrohdaten möglich, beispielsweise im Rahmen eines Filters. Entsprechend werden die Rohdaten von dem Ultraschallsensor an die Steuerungseinheit übertragen, in der die weiteren Schritte des Verfahrens durchgeführt werden.

Das Ermitteln eines Verhältnisses von Echoamplituden des Referenzobjekts in dem wenigstens einen ersten und zweiten Echosignal betrifft insbesondere die von dem Referenzobjekt stammenden Echoamplituden. Diese Echoamplituden des Referenzobjekts sind üblicherweise als Peaks in einem Amplitudenverlauf über die Zeit des jeweiligen empfangenen Echosignals zu erkennen. Das Verhältnis wird beispielsweise als Amplitude des empfangenen Echosignals bei der niedrigeren Ultraschallfrequenz durch die Amplitude des empfangenen Echosignals bei der höheren Ultraschallfrequenz bestimmt. In dem Fall wird eine fehlerhafte Positionierung des Ultraschallsensors dadurch erkannt, dass das Verhältnis der Echoamplituden des Referenzobjekts in dem wenigstens einen ersten und zweiten Echosignal um wenigstens einen vorgegebenen Grenzwert niedriger ist als bei einer korrekten Positionierung des Ultraschallsensors. Allerdings kann das Verhältnis auch umgekehrt bestimmt werden, wodurch sich die fehlerhafte Positionierung des Ultraschallsensors dadurch erkennen lässt, dass das Verhältnis der Echoamplituden des Referenzobjekts in dem wenigstens einen ersten und zweiten Echosignal um wenigstens einen vorgegebenen Grenzwert höher ist als bei einer korrekten Positionierung des Ultraschallsensors.

Die Verfahrensschritte sind hier nur beispielhaft in einer Abfolge angegeben. Die Schritte in unterschiedlichen Abfolgen durchgeführt werden, ohne dass sich prinzipielle Änderungen für das Verfahren ergeben.

In vorteilhafter Ausgestaltung der Erfindung umfasst das Lokalisieren eines Referenzobjekts im Erfassungsbereich des Ultraschallsensors ein Erfassen einer Position des Referenzobjekts im Erfassungsbereich des Ultraschallsensors basierend auf mit einer Mehrzahl Ultraschallsensoren empfangener Echosignale. Die Sensoranordnung umfasst entsprechend eine Mehrzahl Ultraschallsensoren, die einen teilweise überschneidenden Erfassungsbereich aufweisen, so dass das Referenzobjekt von mehreren Ultraschallsensoren erfasst werden kann. Die Mehrzahl Ultraschallsensoren kann den Ultraschallsensor, dessen Positionierung überprüft werden soll, umfassen oder nicht. Insgesamt sind unterschiedliche Konfigurationen möglich, um die Position des Referenzobjekts im Erfassungsbereich des Ultraschallsensors mit der Mehrzahl Ultraschallsensoren zu erfassen. Beispielsweise kann jeder der Ultraschallsensoren selbstständig Ultraschallsignale aussenden und darauf basierende Echosignale empfangen. Auch können beim Aussenden eines Ultraschallsignals von einem der Ultraschallsensoren mehrere der Ultraschallsensoren darauf basierende Echosignale empfangen, sofern die Ultraschallsensoren synchronisiert sind. Dabei können die Echosignale als Rohdaten verarbeitet werden. Alternativ kann es ausreichend sein, Abstandsinformation in Bezug auf das Referenzobjekt in dem Echosignal zu erfassen und zu verarbeiten, um die Position des Referenzobjekts zu erfassen. Vorzugsweise werden dabei benachbarte Ultraschallsensoren verwendet, so dass eine zumindest teilweise Überschneidung ihrer Erfassungsbereiche besteht und Echos des Referenzobjekts von einer Mehrzahl Ultraschallsensoren empfangen werden können. Basierend auf den empfangenen Echosignalen können beispielsweise an sich bekannten Verfahren der Multilateration, insbesondere Trilateration, verwendet werden, um die Position des Referenzobjekts im Erfassungsbereich des Ultraschallsensors zu erfassen. Vorzugsweise wird basierend auf den empfangenen Echosignalen ermittelt, ob das Objekt als Referenzobjekt geeignet ist. Dazu kann basierend auf den empfangenen Echosignalen in an sich bekannter Weise eine Höhenabschätzung für das Objekt durchgeführt werden. Das Referenzobjekt befindet sich vorzugsweise in einem Höhenbereich wie der Ultraschallsensor. Außerdem kann basierend auf den empfangenen Echosignalen in an sich bekannter Weise eine Erkennung von Wänden durchgeführt werden, d.h. ob das Objekt eine große Breite aufweist.

In vorteilhafter Ausgestaltung der Erfindung umfasst das Lokalisieren eines Referenzobjekts im Erfassungsbereich des Ultraschallsensors ein Aussenden wenigstens eines fokussierten Ultraschallpulses mit dem Ultraschallsensor mit einem schmalen Erfassungsbereich und ein Empfangen wenigstens eines entsprechenden Echosignals mit dem Ultraschallsensor, wobei das Referenzobjekt durch ein Auffinden eines in dem wenigstens einen empfangenen Echosignal enthaltenen Echos des Referenzobjekts im Erfassungsbereich des Ultraschallsensors lokalisiert wird. Wie bereits oben ausgeführt wurde, ist der Erfassungsbereich des Ultraschallsensors abhängig von der Frequenz, wobei der Erfassungsbereich bei höheren Frequenzen schmaler und damit fokussiert ist. Dadurch ergibt sich eine Richtcharakteristik des Ultraschallsensors gegenüber niedrigeren Frequenzen. Wenn also basierend auf dem fokussierten Ultraschallsignal, d.h. das Ultraschallsignal weist eine hohe Frequenz mit einer schmalen Sendekeule und einer hohen Richtcharakteristik auf, ein entsprechendes Echosignal empfangen, und sich ein Echo des Objekts darin findet, weist das Objekt eine geeignete Positionierung als Referenzobjekt auf, das es sich auch im breiteren Erfassungsbereich für niedrigere Frequenzen auffinden lassen muss. Wenn das Referenzobjekt im dem schmalen Erfassungsbereich befindet, kann das Verfahren also weiter durchgeführt werden. Es wird sichergestellt, dass sich das Referenzobjekt zumindest für Ultraschallpulse mit einem breiteren Erfassungsbereich in einem mittleren Bereich des entsprechenden Erfassungsbereichs befindet. Aufgrund der Fokussierung des Ultraschallsignals befindet sich das Referenzobjekt vorzugsweise in einem Abstand von dem Ultraschallsensor, dass es auch für weniger fokussierte Ultraschallsignale bei niedrigeren Frequenzen erfasst werden kann. Vorzugsweise erfolgt das Lokalisieren eines Referenzobjekts basierend auf dem Aussenden des wenigstens einen ersten oder zweiten Ultraschallpulses mit dem Ultraschallsensor mit der ersten oder zweiten Ultraschallfrequenz und dem Empfang des entsprechenden Echosignals. Abhängig davon, welches Ultraschallsignal die höhere Frequenz aufweist, stellt das Aussenden dieses Ultraschallsignals das Aussenden des wenigstens einen fokussierten Ultraschallpulses mit einem schmalen Erfassungsbereich dar. Daher ist es vorteilhaft, zunächst das wenigstens eine Ultraschallsignal mit der höheren Frequenz auszusenden, um das Referenzobjekt zu lokalisieren, so dass zur Lokalisierung keine zusätzlichen Ultraschallpulse ausgestrahlt werden müssen. Dies gilt zumindest, sofern sich das Referenzobjekt in dem schmalen Erfassungsbereich befindet. Das Aussenden wenigstens eines fokussierten Ultraschallpulses mit dem Ultraschallsensor mit einem schmalen Erfassungsbereich kann beispielsweise einem Betrieb des Ultraschallsensors mit einer Nennfrequenz entsprechen. Alternativ erfolgt das Aussenden wenigstens eines fokussierten Ultraschallpulses bei einer Frequenz oberhalb der Nennfrequenz. Wichtig ist lediglich, dass zumindest die erste oder die zweite Ultraschallfrequenz nicht höher als die beim Aussenden des wenigstens einen fokussierten Ultraschallpulses verwendete Frequenz ist. Vorzugsweise sind die erste und die zweite Ultraschallfrequenz nicht höher als die beim Aussenden des wenigstens einen fokussierten Ultraschallpulses verwendete Frequenz, wenn der wenigstens eine fokussierte Ultraschallpuls weder der wenigstens eine erste noch der wenigstens eine zweite Ultraschallpuls ist.

In vorteilhafter Ausgestaltung der Erfindung umfasst das Lokalisieren eines Referenzobjekts im Erfassungsbereich des Ultraschallsensors ein Erfassen einer Position des Referenzobjekts im Erfassungsbereich des Ultraschallsensors basierend auf einer Umgebungserfassung mit wenigstens einem Umgebungssensor aus einer optischen Kamera, einem LiDAR-basierten Umgebungssensors und einem Radarsensor. Es wird also Sensorinformation zusätzlicher an dem Fahrzeug befindlicher Umgebungssensoren verwendet, um die Position des Referenzobjekts zu erfassen. Die obigen Ausführungen in Bezug auf die Bestimmung der Position des Referenzobjekts gelten entsprechend.

In vorteilhafter Ausgestaltung der Erfindung umfasst das Verfahren einen zusätzlichen Schritt zum Positionieren des Referenzobjekts in einem Mittelbereich des Erfassungsbereichs des Ultraschallsensors umfasst, vorzugsweise in einem Winkelbereich +/- 15°, weiter bevorzugt in einem Winkelbereich von +/- 10°, und besonders bevorzugt in einem Winkelbereich von +/- 5°, insbesondere in einem Winkel von etwa 0° bezogen auf eine Mittelachse der Halterung des Ultraschallsensors. In dem Mittelbereich des Erfassungsbereichs ist das Verhältnis der Echoamplituden des Referenzobjekts in dem wenigstens einen ersten und zweiten Echosignal besonders aussagekräftig. Außerdem wird verhindert, dass sich das Referenzobjekt im am Rand des Erfassungsbereichs befindet und möglicherweise von dem ersten oder zweiten Ultraschallsignal nicht erfasst wird. Der Mittelbereich ist definiert durch die Sensorachse des Ultraschallsensors bzw. die Mittelachse der Halterung. Der Winkelbereich betrifft eine Ausrichtung in einer horizontalen Ebene. Das Positionieren des Referenzobjekts in einem Mittelbereich des Erfassungsbereichs des Ultraschallsensors kann ein Ausschließen von Objekten, die sich außerhalb des Mittelbereichs befinden, umfassen. In Vorteilhafterweise erfolgt aber eine Positionierung derart, dass eine Anweisung zum Bewegen des Fahrzeugs und/oder des Referenzobjekts ausgegeben wird, um das Referenzobjekt entsprechend zu Positionieren. Das Positionieren des Referenzobjekts erfolgt daher vorzugsweise im Zusammenspiel mit dem Lokalisieren des Referenzobjekts im Erfassungsbereich des Ultraschallsensors. Entsprechend kann die Positionierung soweit erforderlich wiederholt werden, bis das Referenzobjekt in dem Mittelbereich positioniert ist. Besonders bevorzugt führt das Fahrzeug autonom eine Positionierung relativ zu dem Referenzobjekt durch, um das Referenzobjekt in dem Mittelbereich zu positionieren.

In vorteilhafter Ausgestaltung der Erfindung liegt wenigstens eine der ersten Ultraschallfrequenz und der zweiten Ultraschallfrequenz in einem Frequenzbereich unterhalb einer Nennfrequenz des Ultraschallsensors, und die entsprechende andere Ultraschallfrequenz liegt oberhalb der ersten Ultraschallfrequenz, insbesondere oberhalb der Nennfrequenz. Relevant ist insbesondere ein Frequenzunterschied zwischen der ersten und zweiten Ultraschallfrequenz. Bei üblichen Ultraschallsensoren hat es sich aber als vorteilhaft herausgestellt, dass die erste oder die zweite Ultraschallfrequenz niedriger als die Nennfrequenz des Ultraschallsensors ist. Weiter vorteilhaft ist die andere Ultraschallfrequenz höher als die Nennfrequenz des Ultraschallsensors. Besonders bevorzugt sind die erste und die zweite Ultraschallfrequenz betragsmäßig gleichmäßig beabstandet von der Nennfrequenz. Beispielsweise hat sich eine Verwendung von etwa 46 kHz und 59 kHz als erste bzw. zweite Ultraschallfrequenz als vorteilhaft erwiesen. Auch eine Verwendung von etwa 49 kHz und 55 kHz als erste bzw. zweite Ultraschallfrequenz hat sich als effektiv erwiesen. Entsprechendes gilt für Frequenzen zwischen den angegebenen Werten. Die Verwendung von etwa 49 kHz und 55 kHz als erste bzw. zweite Ultraschallfrequenz ist dabei bei gängigen Ultraschallsensoren in einem Standardbetriebsmodus eines typischen Ultraschallsensors möglich und daher besonders einfach zu realisieren. Eine typische Nennfrequenz des Ultraschallsensors liegt im Bereich zwischen 49 kHz und 55 kHz, insbesondere bei etwa 52 kHz.

In vorteilhafter Ausgestaltung der Erfindung umfasst das Verfahren ein wiederholtes Aussenden des wenigstens einen ersten Ultraschallpulses und/oder des wenigstens einen zweiten Ultraschallpulses sowie ein wiederholtes Empfangen des wenigstens einen ersten Echosignals und/oder des wenigstens eines zweiten Echosignals, und das Ermitteln eines Verhältnisses von Echoamplituden des Referenzobjekts in dem wenigstens einen ersten und zweiten Echosignal umfasst das Ermitteln des Verhältnisses der Echoamplituden des Referenzobjekts basierend auf einer Mehrzahl erster und zweiter Echosignale. Dadurch können statistische Methoden angewendet werden, um die Echoamplituden des Referenzobjekts in dem wenigstens einen ersten und zweiten Echosignal und/oder das Verhältnis der Echoamplituden des Referenzobjekts basierend auf einer Mehrzahl erster und zweiter Echosignale zu bestimmen. Entsprechend können Echoamplituden des Referenzobjekts in dem wenigstens einen ersten und zweiten Echosignal und/oder das Verhältnis der Echoamplituden beispielsweise als Mittelwerte, als gewichtete Mittelwerte und/oder als Median bestimmt werden. So können zunächst die Echoamplituden des Referenzobjekts in dem wenigstens einen ersten und zweiten Echosignal wie angegeben bestimmt werden, so dass darauf basierend das Verhältnis der Amplituden des ersten und zweiten Echosignals gebildet werden kann. Alternativ kann für beliebige Kombinationen aus ersten und zweiten Echosignalen zunächst ein Einzelverhältnis ermittelt werden, wobei das Verhältnis dann basierend auf den Einzelverhältnissen ermittelt wird. Durch die Verwendung einer Mehrzahl Echosignale kann eine höhere Sicherheit für das Verhältnis der Echoamplituden des Referenzobjekts in dem wenigstens einen ersten und zweiten Echosignal und damit für die korrekte Positionierung des Ultraschallsensors erzielt werden. Durch eine höhere Sicherheit für das Verhältnis der Echoamplituden eine falsche Erkennung einer fehlerhaften Positionierung des Ultraschallsensors zuverlässig vermieden werden. Auch kann beispielsweise der Grenzwert besonders nah an dem Verhältnis für eine korrekte Positionierung des Ultraschallsensors gewählt werden.

In vorteilhafter Ausgestaltung der Erfindung umfasst das Verfahren einen Schritt zum Ermitteln einer Position des Referenzobjekts in dem Erfassungsbereich des Ultraschallsensors, und das Ausgeben einer fehlerhaften Positionierung des Ultraschallsensors umfasst das Ausgeben einer fehlerhaften Positionierung des Ultraschallsensors, wenn das Verhältnis der Echoamplituden des Referenzobjekts in dem wenigstens einen ersten und zweiten Echosignal um wenigstens einen vorgegebenen Grenzwert von dem Verhältnis für eine korrekte Positionierung des Ultraschallsensors, das abhängig von der Position des Referenzobjekts in dem Erfassungsbereich des Ultraschallsensors ist, abweicht.

In vorteilhafter Ausgestaltung der Erfindung umfasst das Verfahren einen Schritt zum Ermitteln einer Position des Referenzobjekts in dem Erfassungsbereich des Ultraschallsensors, und das Ausgeben einer fehlerhaften Positionierung des Ultraschallsensors umfasst das Ausgeben einer fehlerhaften Positionierung des Ultraschallsensors, wenn das Verhältnis der Echoamplituden des Referenzobjekts in dem wenigstens einen ersten und zweiten Echosignal um wenigstens einen vorgegebenen Grenzwert, der abhängig von der Position des Referenzobjekts in dem Erfassungsbereich des Ultraschallsensors ist, von dem Verhältnis für eine korrekte Positionierung des Ultraschallsensors abweicht.

Die beiden vorgenannten Fälle betreffen eine positionsabhängige Auswertung der Echoamplituden des Referenzobjekts in den empfangenen Echosignalen. So ergibt sich auch bei einer korrekten Positionierung des Ultraschallsensors, dass das Verhältnis der Echoamplituden des Referenzobjekts in dem wenigstens einen ersten und zweiten Echosignal abhängig von einer Positionierung des Referenzobjekts sein kann. Während sich für einen engen Winkelbereich um die Sensorachse herum ergibt, dass das Verhältnis der Echoamplituden des Referenzobjekts in dem wenigstens einen ersten und zweiten Echosignal ungefähr eins ist, können bei abweichenden Positionen bereits Abweichungen auftreten. Um die Positionierung des Ultraschallsensors besonders zuverlässig überprüfen zu können, wird daher die Position des Referenzobjekts berücksichtigt, entweder indem das Verhältnis für eine korrekte Positionierung abhängig von der Position des Referenzobjekts ist, oder indem der Grenzwert abhängig von der Position des Referenzobjekts ist. Die Position des Referenzobjekts ist insbesondere eine Winkelposition in der horizontalen Ebene. Bei einer Kombination sowohl des Verhältnisses für eine korrekte Positionierung und des Grenzwerts abhängig von der Position des Referenzobjekts ist entsprechend nur eine Position des Referenzobjekts zu ermitteln.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Es zeigt
- Fig. 1: eine schematische Ansicht eines Ultraschallsensors gemäß einer ersten, bevorzugten Ausführungsform in einer Halterung, wobei der Ultraschallsensor korrekt in der Halterung positioniert und verrastet ist,
- Fig. 2: eine schematische Ansicht des Ultraschallsensors in der Halterung gemäß der Darstellung in Fig. 1, wobei der Ultraschallsensor falsch in der Halterung positioniert und entsprechend nicht vollständig darin verrastet ist,
- Fig. 3: ein Diagramm der Erfassungsbereiche des Ultraschallsensors, der in Übereinstimmung mit Fig. 1 korrekt in der Halterung positioniert und verrastet ist, und des Ultraschallsensors, der in Übereinstimmung mit Fig. 2 falsch in der Halterung positioniert und entsprechend nicht vollständig darin verrastet ist, bei einer mittleren Ultraschallfrequenz,
- Fig. 4: ein Diagramm der Erfassungsbereiche des Ultraschallsensors, der in Übereinstimmung mit Fig. 1 korrekt in der Halterung positioniert und verrastet ist, und des Ultraschallsensors, der in Übereinstimmung mit Fig. 2 falsch in der Halterung positioniert und entsprechend nicht vollständig darin verrastet ist, bei einer hohen, ersten Ultraschallfrequenz,
- Fig. 5: ein Diagramm der Erfassungsbereiche des Ultraschallsensors, der in Übereinstimmung mit Fig. 1 korrekt in der Halterung positioniert und verrastet ist, und des Ultraschallsensors, der in Übereinstimmung mit Fig. 2 falsch in der Halterung positioniert und entsprechend nicht vollständig darin verrastet ist, bei einer niedrigen, zweiten Ultraschallfrequenz,
- Fig. 6: ein Diagramm von Verhältnissen von Echoamplituden eines Referenzobjekts in einem ersten und zweiten Echosignal mit der ersten und zweiten Ultraschallfrequenz für den Ultraschallsensor, der in Übereinstimmung mit Fig. 1 korrekt in der Halterung positioniert und verrastet ist, und für den Ultraschallsensor, der in Übereinstimmung mit Fig. 2 falsch in der Halterung positioniert und entsprechend nicht vollständig darin verrastet ist, über eine Winkelpositon des Referenzobjekts,
- Fig. 7: ein Ablaufdiagramm eines ersten Verfahrens zum Überprüfen einer Positionierung des Ultraschallsensors aus den Figuren 1 und 2 an einem Fahrzeug, wobei der Ultraschallsensor in einer Halterung an dem Fahrzeug montiert ist,
- Fig. 8: ein Ablaufdiagramm eines zweiten Verfahrens zum Überprüfen einer Positionierung des Ultraschallsensors aus den Figs. 1 und 2 an einem Fahrzeug, wobei der Ultraschallsensor in einer Halterung an dem Fahrzeug montiert ist, und
- Fig. 9: eine schematische Darstellung eines Fahrzeugs mit einer Sensoranordnung mit einer Mehrzahl Ultraschallsensoren aus Figs. 1 und 2 und mit einer mit der Mehrzahl Ultraschallsensoren verbunden Steuerungseinheit.

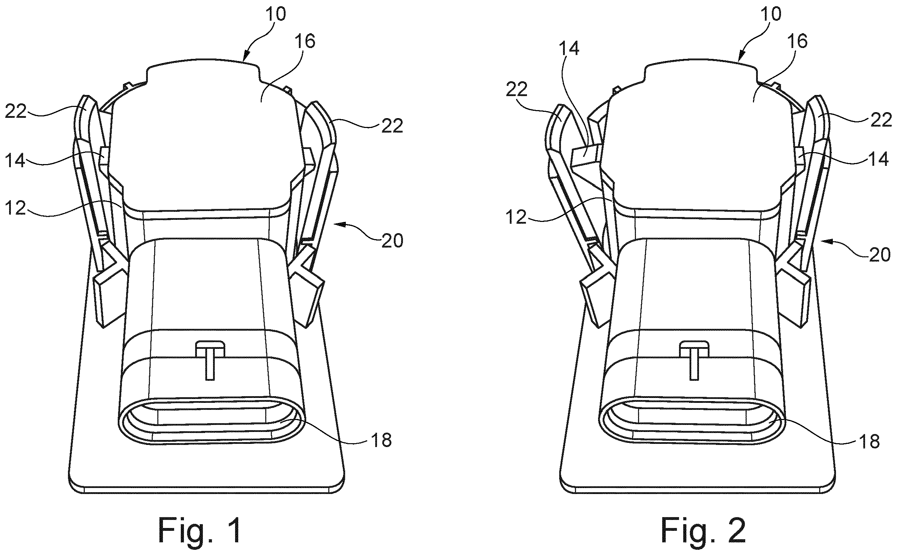

Die Figur 1 zeigt einen Ultraschallsensor 10 gemäß einer ersten, bevorzugten Ausführungsform.

Der Ultraschallsensor 10 umfasst ein Sensorgehäuse 12, an dem diametral einander gegenüberliegend zwei Rastvorsprünge 14 ausgebildet sind. Der Ultraschallsensor 10 umfasst weiterhin einen in der Darstellung in Figur 1 nicht sichtbaren Sensorkopf mit einer Ultraschallmembran. Innerhalb des Sensorgehäuses 12 ist eine Ansteuer- und Auswerteelektronik angeordnet. Das Sensorgehäuse 12 ist mit einem Deckel 16 verschlossen. Von einem in Figur 1 proximalen Ende des Sensorgehäuses 12 ragt eine Steckerbuchse 18 in radialer Richtung ab. Es versteht sich, dass bei anderen Ausführungsformen die Steckerbuchse 18 auch in anderen Winkel vom proximalen Ende des Sensorgehäuses abragen kann.

Der Ultraschallsensor 10 ist in einer Halterung 20 aufgenommen. Dazu umfasst die Halterung 20 zwei Rastarme 22 mit hier nicht darstellten Rastöffnungen. Die Rastarme 22 können in radialer Richtung federn und dienen einem Halten und Sichern des Ultraschallsensors 10. Bei bestimmungsgemäßer Positionierung des Ultraschallsensors 10 in der Halterung 20 greifen beide Rastvorsprünge 14 in die entsprechenden Öffnungen der Rastarme 22 ein und der Ultraschallsensor 10 ist in dem Sensorhalter 20 sowohl korrekt positioniert als auch sicher gehalten.

Der Ultraschallsensor 10 ist Teil einer Sensoranordnung 30 mit einer Mehrzahl Ultraschallsensoren 10 und einer Steuerungseinheit 32, die über eine Datenverbindung 34 mit den Ultraschallsensoren 10 verbunden ist. Die Steuerungseinheit 32 kann eine prinzipiell beliebige Datenverarbeitungseinrichtung sein. Im Automobilbereich werden dabei oftmals sogenannte eingebettete Systeme verwendet. Dabei findet der Begriff ECU (Electronic Control Unit) für solche Steuerungseinheiten 32 Anwendung. Die Datenverbindung 34 kann einen Bus umfassen, beispielsweise als DSI3-Bus, Can-Bus, Flexray oder auch als proprietäre Implementierung. Prinzipiell ist aber auch eine direkte Datenverbindung 34 zwischen der Steuerungseinheit 32 und jedem der Ultraschallsensoren 10 möglich.

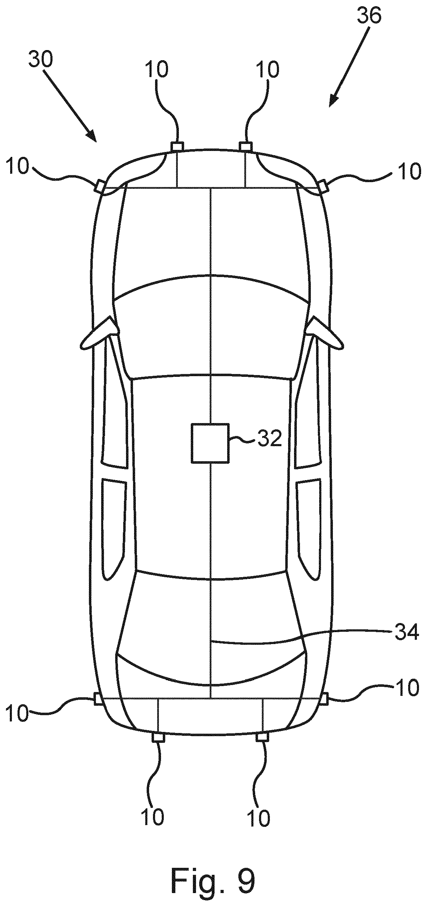

Die Ultraschallsensoren 10 der Sensoranordnung 30 sind in diesem Ausführungsbeispiel an einer Rückseite und einer Vorderseite eines Fahrzeugs 36 angebracht, wie in Figur 9 dargestellt ist. Dazu sind die Halterungen 20 der Ultraschallsensoren 10 fest an der Rückseite und der Vorderseite des Fahrzeugs 36 montiert, beispielsweise an einer vorderen oder hinteren Stoßstange des Fahrzeugs 36.

Auch Figur 2 zeigt den Ultraschallsensor 10 aus Figur 1 der ersten, bevorzugten Ausführungsform.

Im Gegensatz zu der Darstellung in Figur 1 greift jedoch nur einer der beiden Rastvorsprünge 14 des Ultraschallsensors 10 in die entsprechende Öffnung eines der Rastarme 22 ein. Dadurch ist der Ultraschallsensor 10 nicht korrekt positioniert. Folge davon ist, dass der Ultraschallsensor 10 zwar vermeintlich sicher in der Halterung 20 befestigt ist, in Wirklichkeit jedoch verkantet und damit nicht bestimmungsgemäß in der Halterung 20 positioniert ist. Durch eine solche nicht bestimmungsgemäße Positionierung des Ultraschallsensors 10 in der Halterung 20 kommt es zu Lage- und/oder Winkelabweichungen einer Sensorachse bezogen auf eine Mittelachse 42 der Halterung 20, was zu einer fehlerhaften Funktion des Ultraschallsensors 10 und darüber hinaus zu Fehlfunktionen von Fahrunterstützungssystemen, die diesen Ultraschallsensors 10 nutzen, führen kann.

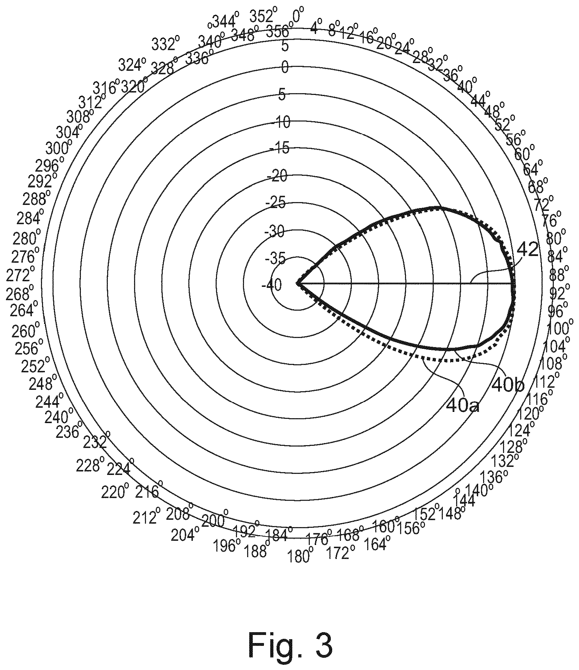

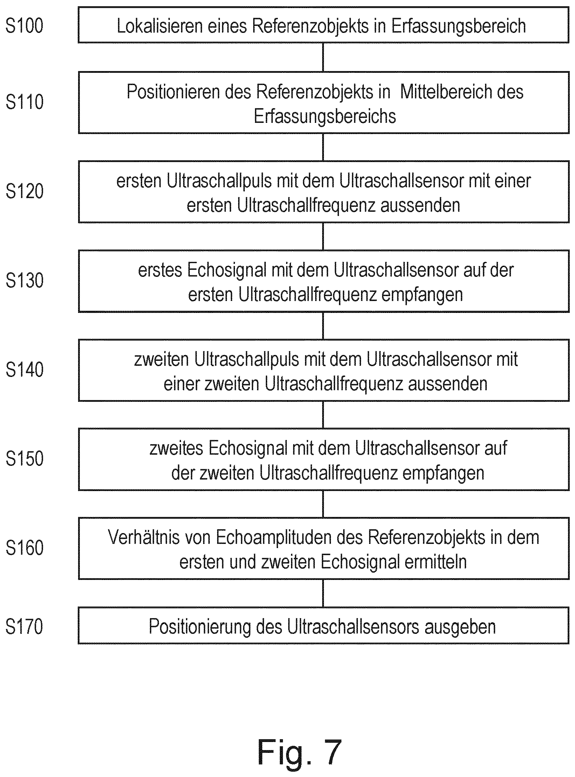

Um solche fehlerhaften Positionierungen erkennen zu können, wird nachstehend ein in Figur 7 dargestelltes erstes Verfahren zum Überprüfen einer Positionierung des Ultraschallsensors 10 in der Halterung 20 an dem Fahrzeug 36 beschrieben. Die Durchführung des Verfahrens wird von der Steuerungseinheit 32 gesteuert. Dabei kann die Steuerungseinheit 32 jeden der Ultraschallsensoren 10 der Sensoranordnung 30 über die Datenverbindung 34 individuell ansteuern, um das nachstehend beschriebene Verfahren durchzuführen. Das Verfahren wird unter zusätzlichem Bezug auf die Figuren 3 bis 6 beschrieben.

Das Verfahren beginnt mit Schritt S100, der ein Lokalisieren eines Referenzobjekts im Erfassungsbereich 40 des Ultraschallsensors 10 betrifft. Der Erfassungsbereich 40 definiert hier einen Bereich, in dem ein Echo des Referenzobjekts für eine erste und eine zweite Ultraschallfrequenz empfangen werden kann. Der Erfassungsbereich 40 ist bezogen auf eine korrekte Positionierung des Ultraschallsensors 10 mit seiner Sensorachse in Übereinstimmung mit einer Mittelachse 42 der Halterung 20 definiert, die auch eine korrekte Positionierung des Ultraschallsensors 10 definiert. Für eine Nennfrequenz, d.h. in einem mittleren Frequenzbereich, sind in Figur 3 Erfassungsbereiche 40a, 40b entsprechend für eine korrekte Positionierung des Ultraschallsensors 10 in der Halterung 20, wie in Figur 1 dargestellt, und für eine fehlerhafte Positionierung des Ultraschallsensors 10 in der Halterung 20, wie in Figur 2 dargestellt, gezeigt.

Das Lokalisieren eines Referenzobjekts im Erfassungsbereich 40 des Ultraschallsensors 10 betrifft ein Erfassen eines geeigneten Referenzobjekts in dem Erfassungsbereich 40. Das Objekt muss also als Referenzobjekt geeignet sein und sich in dem Erfassungsbereich 40 des Ultraschallsensors 10 befinden.

Dazu wird eine Position des Referenzobjekts im Erfassungsbereich 40 des Ultraschallsensors 10 basierend auf mit einer Mehrzahl Ultraschallsensoren 10 empfangener Echosignale durchgeführt. Beispielsweise werden hier von allen an der Vorderseite des Fahrzeugs 36 befindlichen Ultraschallsensoren 10 selbstständig Ultraschallsignale ausgesendet und darauf basierende Echosignale empfangen, um das Verfahren für einen Ultraschallsensor 10 an der Vorderseite des Fahrzeugs 36 durchzuführen. Aus den Echosignalen wird jeweils Abstandsinformation in Bezug auf das Referenzobjekt in dem Echosignal erfasst und verarbeitet, um die Position des Referenzobjekts zu erfassen. Es werden beispielsweise an sich bekannte Verfahren der Multilateration, insbesondere Trilateration, verwendet, um die Position des Referenzobjekts im Erfassungsbereich 40 des Ultraschallsensors 10 zu erfassen. Zusätzlich wird basierend auf den empfangenen Echosignalen ermittelt, ob das Objekt als Referenzobjekt geeignet ist. Dazu wird basierend auf den empfangenen Echosignalen in an sich bekannter Weise eine Höhenabschätzung für das Objekt durchgeführt werden. Das Referenzobjekt befindet sich vorzugsweise in einem Höhenbereich wie der Ultraschallsensor 10. Außerdem wird basierend auf den empfangenen Echosignalen in an sich bekannter Weise eine Erkennung beispielsweise von Wänden durchgeführt, um solche Objekte auszuschließen. Die Position des Referenzobjekts wird relativ zu dem Ultraschallsensor 10 als Winkel in einer horizontalen Ebene zusammen mit einem Abstand ermittelt.

Schritt S110 betrifft ein Positionieren des Referenzobjekts in einem Mittelbereich des Erfassungsbereichs 40 des Ultraschallsensors 10, vorzugsweise in einem Winkelbereich +/- 15°, weiter bevorzugt in einem Winkelbereich von +/- 10°, und besonders bevorzugt in einem Winkelbereich von +/- 5°, insbesondere in einem Winkel von etwa 0° bezogen auf eine Mittelachse 42 der Halterung 20, die bei korrekter Positionierung des Ultraschallsensors 10 einer Sensorachse des Ultraschallsensors 10 entspricht.

Basierend auf der in Schritt S100 ermittelten Position des Referenzobjekts wird eine Anweisung zum Bewegen des Fahrzeugs 36 und/oder des Referenzobjekts ausgegeben wird, um das Referenzobjekt entsprechend relativ zu dem Fahrzeug 36 und damit relativ zu dem Ultraschallsensor 10 zu Positionieren. Das Positionieren des Referenzobjekts erfolgt daher im Zusammenspiel mit dem Lokalisieren des Referenzobjekts im Erfassungsbereich 40 des Ultraschallsensors 10. Entsprechend wird die Positionierung in einem weiteren Schritt S100 erneut überprüft, und soweit erforderlich wird auch das Positionieren des Referenzobjekts erneut durchgeführt, bis das Referenzobjekt eine gewünschte Positionierung in dem Mittelbereich des Erfassungsbereichs 40 aufweist. Vorzugsweise führt das Fahrzeug 36 autonom die Positionierung relativ zu dem Referenzobjekt durch, um das Referenzobjekt in dem Mittelbereich des Erfassungsbereichs 40 zu positionieren.

Schritt S120 betrifft ein Aussenden eines ersten Ultraschallpulses mit dem Ultraschallsensor 10 mit einer ersten Ultraschallfrequenz. Die erste Ultraschallfrequenz ist hier eine Frequenz von etwa 59 kHz. Der Ultraschallsensor 10 hat hier beispielshaft eine Nennfrequenz von 52 kHz, so dass die erste Ultraschallfrequenz über der Nennfrequenz liegt.

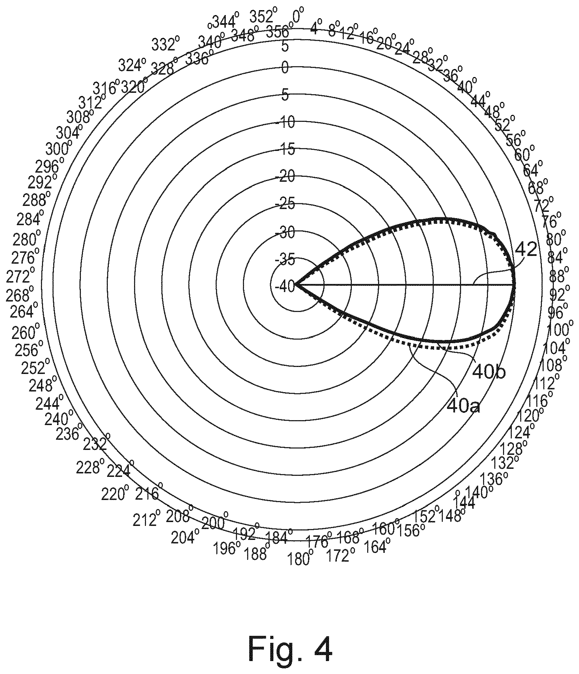

Schritt S130 betrifft ein Empfangen eines ersten Echosignals mit dem Ultraschallsensor 10 auf der ersten Ultraschallfrequenz. Erfassungsbereiche 40a, 40b entsprechend für eine korrekte Positionierung des Ultraschallsensors 10 in der Halterung 20, wie in Figur 1 dargestellt, und für eine fehlerhafte Positionierung des Ultraschallsensors 10 in der Halterung 20, wie in Figur 2 dargestellt, sind in Figur 4 gezeigt. Dabei werden als erstes Echosignal Sensorrohdaten empfangen. Die Sensorrohdaten werden von dem Ultraschallsensor 10 an die Steuerungseinheit 32 übertragen.

Schritt S140 betrifft ein Aussenden eines zweiten Ultraschallpulses mit dem Ultraschallsensor 10 mit einer zweiten Ultraschallfrequenz. Die zweite Ultraschallfrequenz ist hier eine Frequenz von etwa 46 kHz und liegt somit unter der Nennfrequenz.

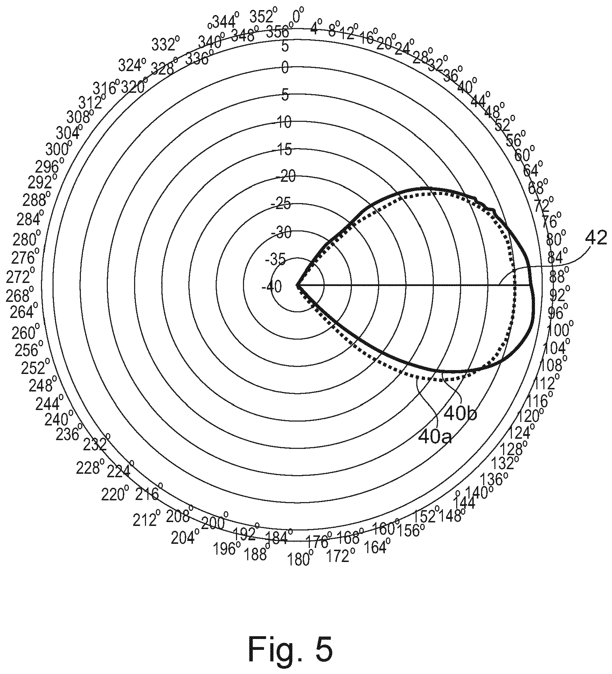

Schritt S150 betrifft ein Empfangen eines zweiten Echosignals mit dem Ultraschallsensor 10 auf der zweiten Ultraschallfrequenz. Erfassungsbereiche 40a, 40b entsprechend für eine korrekte Positionierung des Ultraschallsensors 10 in der Halterung 20, wie in Figur 1 dargestellt, und für eine fehlerhafte Positionierung des Ultraschallsensors 10 in der Halterung 20, wie in Figur 2 dargestellt, sind in Figur 5 gezeigt. Auch als zweites Echosignal werden Sensorrohdaten empfangen, die von dem Ultraschallsensor 10 an die Steuerungseinheit 32 übertragen werden.

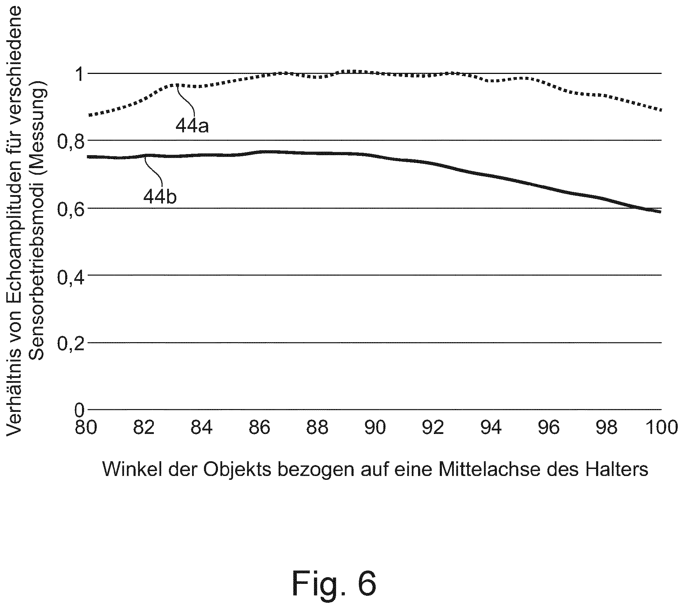

Schritt S160 betrifft ein Ermitteln eines Verhältnisses von Echoamplituden des Referenzobjekts in dem ersten und zweiten Echosignal. Entsprechende Verhältnisse 44 sind in Figur 6 dargestellt, wobei ein Verhältnis 44a für eine korrekte Positionierung des Ultraschallsensors 10 in der Halterung 20, wie in Figur 1 dargestellt, und ein Verhältnis 44b für eine fehlerhafte Positionierung des Ultraschallsensors 10 in der Halterung 20, wie in Figur 2 dargestellt, angegeben sind.

Es erfolgen ein entsprechendes Erfassen und Verarbeiten von Pegeln von Echoamplituden des Referenzobjekts in dem ersten und zweiten Echosignal. Die Verarbeitung erfolgt in der Steuerungseinheit 32.

Schritt S170 betrifft ein Ausgeben einer fehlerhaften Positionierung des Ultraschallsensors 10, wenn das Verhältnis 44 der Echoamplituden des Referenzobjekts in dem ersten und zweiten Echosignal um wenigstens einen vorgegebenen Grenzwert von einem Verhältnis für eine korrekte Positionierung des Ultraschallsensors 10 abweicht. Die Ausgabe erfolgt durch die Steuerungseinheit 32.

Dabei erfolgt das Ausgeben einer fehlerhaften Positionierung des Ultraschallsensors 10, wenn das Verhältnis 44 der Echoamplituden des Referenzobjekts in dem ersten und zweiten Echosignal um wenigstens einen vorgegebenen Grenzwert, der abhängig von der Position des Referenzobjekts in dem Erfassungsbereich 40 des Ultraschallsensors 10 ist, von dem Verhältnis für eine korrekte Positionierung des Ultraschallsensors 10 abweicht. Wie in Figur 6 dargestellt ist, sind die Verläufe der Verhältnisse der Echoamplituden jeweils unterschiedlich abhängig von der Position des Referenzobjekts in dem Erfassungsbereich 40, die in Schritt S100 bestimmt wurde. Somit erfolgt eine positionsabhängige Auswertung des Verhältnisses der Echoamplituden des Referenzobjekts in den empfangenen Echosignalen.

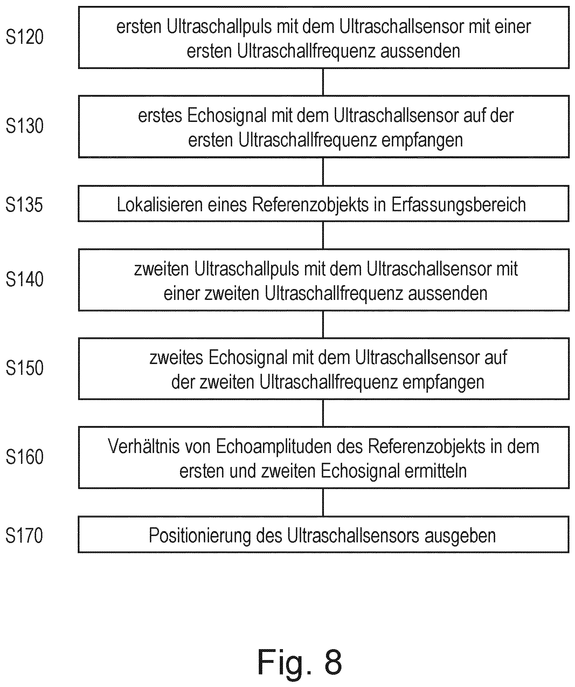

Nachstehend ein in Figur 8 dargestelltes zweites Verfahren zum Überprüfen einer Positionierung des Ultraschallsensors 10 in der Halterung 20 an dem Fahrzeug 36 beschrieben. Das Verfahren wird ebenfalls mit der oben beschriebenen Sensoranordnung 30 durchgeführt. Die Durchführung des Verfahrens wird von der Steuerungseinheit 32 gesteuert. Dabei kann die Steuerungseinheit 32 jeden der Ultraschallsensoren 10 der Sensoranordnung 30 über die Datenverbindung 34 individuell ansteuern, um das nachstehend beschriebene Verfahren durchzuführen. Das zweite Verfahren entspricht teilweise dem ersten Verfahren, so dass hier im Wesentlichen Unterschiede zwischen den beiden Verfahren beschrieben werden.

Das zweite Verfahren beginnt mit Schritt S120 wie zuvor unter Bezug auf das erste Verfahren beschrieben, der ein Aussenden eines ersten Ultraschallpulses mit dem Ultraschallsensor 10 mit einer ersten Ultraschallfrequenz betrifft. Die erste Ultraschallfrequenz ist auch hier eine Frequenz von etwa 59 kHz. Der Ultraschallsensor 10 hat hier beispielshaft eine Nennfrequenz von 52 kHz, so dass die erste Ultraschallfrequenz über der Nennfrequenz liegt.

Schritt S130 betrifft ein Empfangen eines ersten Echosignals mit dem Ultraschallsensor 10 auf der ersten Ultraschallfrequenz. Erfassungsbereiche 40a, 40b entsprechend für eine korrekte Positionierung des Ultraschallsensors 10 in der Halterung 20, wie in Figur 1 dargestellt, und für eine fehlerhafte Positionierung des Ultraschallsensors 10 in der Halterung 20, wie in Figur 2 dargestellt, sind in Figur 4 gezeigt. Dabei werden als erstes Echosignal Sensorrohdaten empfangen. Die Sensorrohdaten werden von dem Ultraschallsensor 10 an die Steuerungseinheit 32 übertragen.

Schritt S135 betrifft ein Lokalisieren eines Referenzobjekts im Erfassungsbereich 40 des Ultraschallsensors 10 betrifft. Der Erfassungsbereich 40 definiert auch hier einen Bereich, in dem ein Echo des Referenzobjekts für eine erste und eine zweite Ultraschallfrequenz empfangen werden kann. Der Erfassungsbereich 40 ist bezogen auf eine korrekte Positionierung des Ultraschallsensors 10 mit seiner Sensorachse in Übereinstimmung mit einer Mittelachse der Halterung 20 definiert, welche die korrekte Positionierung des Ultraschallsensors 10 definiert.

Das Lokalisieren des Referenzobjekts im Erfassungsbereich 40 des Ultraschallsensors 10 betrifft ein Erfassen eines geeigneten Referenzobjekts in dem Erfassungsbereich 40.

Entsprechend wird das Referenzobjekt in dem ersten empfangenen Echosignal ermittelt. Das erste empfangene Echosignal basieret auf dem Aussenden des ersten Ultraschallpulses mit der hohen Frequenz von 59 kHz, weshalb der erste Ultraschallpuls ein fokussierter Ultraschallpuls ist, so dass sich ein schmaler Erfassungsbereich 40 für den Empfang des ersten Echosignals mit dem Ultraschallsensor 10 ergibt.

Wenn in dem ersten Echosignal ein Echo des Referenzobjekts enthalten ist, wird diese im Erfassungsbereich 40 des Ultraschallsensors 10 lokalisiert. Das Objekt weist eine geeignete Positionierung als Referenzobjekt auf, das es sich auch im breiteren Erfassungsbereich 40 für niedrigere Frequenzen auffinden lassen wird.

Schritt S140 betrifft ein Aussenden eines zweiten Ultraschallpulses mit dem Ultraschallsensor 10 mit einer zweiten Ultraschallfrequenz. Die zweite Ultraschallfrequenz ist hier eine Frequenz von etwa 46 kHz und liegt somit unter der Nennfrequenz des Ultraschallsensors 10.

Schritt S150 betrifft ein Empfangen eines zweiten Echosignals mit dem Ultraschallsensor 10 auf der zweiten Ultraschallfrequenz. Erfassungsbereiche 40a, 40b entsprechend für eine korrekte Positionierung des Ultraschallsensors 10 in der Halterung 20, wie in Figur 1 dargestellt, und für eine fehlerhafte Positionierung des Ultraschallsensors 10 in der Halterung 20, wie in Figur 2 dargestellt, sind in Figur 5 gezeigt. Auch als zweites Echosignal werden dabei Sensorrohdaten empfangen, die von dem Ultraschallsensor 10 an die Steuerungseinheit 32 übertragen werden.

Schritt S160 betrifft ein Ermitteln eines Verhältnisses von Echoamplituden des Referenzobjekts in dem ersten und zweiten Echosignal. Entsprechende Verhältnisse 44 sind in Figur 6 dargestellt, wobei ein Verhältnis 44a für eine korrekte Positionierung des Ultraschallsensors 10 in der Halterung 20, wie in Figur 1 dargestellt, und ein Verhältnis 44b für eine fehlerhafte Positionierung des Ultraschallsensors 10 in der Halterung 20, wie in Figur 2 dargestellt, angegeben ist.

Es erfolgen ein entsprechendes Erfassen und Verarbeiten von Pegeln von Echoamplituden des Referenzobjekts in dem ersten und zweiten Echosignal.

Schritt S170 betrifft ein Ausgeben einer fehlerhaften Positionierung des Ultraschallsensors 10, wenn das Verhältnis 44 der Echoamplituden des Referenzobjekts in dem ersten und zweiten Echosignal um wenigstens einen vorgegebenen Grenzwert von einem Verhältnis für eine korrekte Positionierung des Ultraschallsensors 10 abweicht. Bei dem zweiten Verfahren ist der Grenzwert unabhängig von einer exakten Position des Referenzobjekts, da die exakte Position im Gegensatz zum 1. Verfahren nicht ermittelt wurde.

Bei dem in Figur 8 dargestellten zweiten Verfahren ist es möglich auf einen dedizierten Erkennungs-Modus zu verzichten, wenn die Ultraschallsensoren 10 im Normalbetrieb alternierend bei einer hohen Frequenz und bei einer niedrigen Frequenz aussenden. Dadurch können Totzeiten im Normalbetrieb vermieden werden. Ferner ist dadurch eine permanente Überprüfung möglich.

### Bezugszeichenliste

- 10: Ultraschallsensor
- 12: Sensorgehäuse
- 14: Rastvorsprung
- 16: Deckel
- 18: Steckerbuchse
- 20: Halterung
- 22: Rastarm
- 30: Sensoranordnung
- 32: Steuerungseinheit
- 34: Datenverbindung
- 36: Fahrzeug
- 40: Erfassungsbereich
- 40a: Erfassungsbereich korrekte Positionierung
- 40b: Erfassungsbereich fehlerhafte Positionierung
- 42: Mittelachse
- 44: Verhältnis Echoamplituden
- 44a: Verhältnis Echoamplituden korrekte Positionierung
- 44b: Verhältnis Echoamplituden fehlerhafte Positionierung

## Patentansprüche

1. Verfahren zum Überprüfen einer Positionierung eines Ultraschallsensors (10) an einem Fahrzeug (36), wobei der Ultraschallsensor (10) in einer Halterung (20) an dem Fahrzeug (36) montiert ist, umfassend die Schritte
Lokalisieren eines Referenzobjekts im Erfassungsbereich (40) des Ultraschallsensors (10),
Aussenden wenigstens eines ersten Ultraschallpulses mit dem Ultraschallsensor (10) mit einer ersten Ultraschallfrequenz,
Empfangen wenigstens eines ersten Echosignals mit dem Ultraschallsensor (10) auf der ersten Ultraschallfrequenz,
Aussenden wenigstens eines zweiten Ultraschallpulses mit dem Ultraschallsensor (10) mit einer zweiten Ultraschallfrequenz,
Empfangen wenigstens eines zweiten Echosignals mit dem Ultraschallsensor (10) auf der zweiten Ultraschallfrequenz,
Ermitteln eines Verhältnisses (44) von Echoamplituden des Referenzobjekts in dem wenigstens einen ersten und zweiten Echosignal, und
Ausgeben einer fehlerhaften Positionierung des Ultraschallsensors (10), wenn das Verhältnis (44) der Echoamplituden des Referenzobjekts in dem wenigstens einen ersten und zweiten Echosignal um wenigstens einen vorgegebenen Grenzwert von einem Verhältnis (44) für eine korrekte Positionierung des Ultraschallsensors (10) abweicht.

2. Verfahren nach Anspruch 1, **dadurch gekennzeichnet, dass**
das Lokalisieren eines Referenzobjekts im Erfassungsbereich (40) des Ultraschallsensors (10) ein Erfassen einer Position des Referenzobjekts im Erfassungsbereich (40) des Ultraschallsensors (10) basierend auf mit einer Mehrzahl von Ultraschallsensoren (10) empfangener Echosignale umfasst.

3. Verfahren nach Anspruch 1, **dadurch gekennzeichnet, dass**
das Lokalisieren eines Referenzobjekts im Erfassungsbereich (40) des Ultraschallsensors (10) ein Aussenden wenigstens eines fokussierten Ultraschallpulses mit dem Ultraschallsensor (10) mit einem schmalen Erfassungsbereich (40) und ein Empfangen wenigstens eines entsprechenden Echosignals mit dem Ultraschallsensor (10) umfasst, wobei das Referenzobjekt durch ein Auffinden eines in dem wenigstens einen empfangenen Echosignal enthaltenen Echos des Referenzobjekts im Erfassungsbereich (40) des Ultraschallsensors (10) lokalisiert wird.

4. Verfahren nach Anspruch 1, **dadurch gekennzeichnet, dass**
das Lokalisieren eines Referenzobjekts im Erfassungsbereich (40) des Ultraschallsensors (10) ein Erfassen einer Position des Referenzobjekts im Erfassungsbereich (40) des Ultraschallsensors (10) basierend auf einer Umgebungserfassung mit wenigstens einem Umgebungssensor aus einer optischen Kamera, einem LiDAR-basierten Umgebungssensors und einem Radarsensor umfasst.

5. Verfahren nach einem der vorhergehenden Ansprüche, **dadurch gekennzeichnet, dass**
das Verfahren einen zusätzlichen Schritt zum Positionieren des Referenzobjekts in einem Mittelbereich des Erfassungsbereichs (40) des Ultraschallsensors (10) umfasst.

6. Verfahren nach einem der vorhergehenden Ansprüche, **dadurch gekennzeichnet, dass**
die erste Ultraschallfrequenz in einem Frequenzbereich unterhalb einer Nennfrequenz des Ultraschallsensors (10) liegt, und die zweite Ultraschallfrequenz oberhalb der ersten Ultraschallfrequenz liegt, oder
die zweite Ultraschallfrequenz in einem Frequenzbereich unterhalb einer Nennfrequenz des Ultraschallsensors (1) liegt, und die erste Ultraschallfrequenz oberhalb der zweiten Ultraschallfrequenz liegt.

7. Verfahren nach einem der Ansprüche 1 bis 5, **dadurch gekennzeichnet, dass** die erste Ultraschallfrequenz in einem Frequenzbereich unterhalb einer Nennfrequenz des Ultraschallsensors (10) liegt, und die zweite Ultraschallfrequenz oberhalb der Nennfrequenz liegt, oder
die zweite Ultraschallfrequenz in einem Frequenzbereich unterhalb einer Nennfrequenz des Ultraschallsensors (1) liegt, und die erste Ultraschallfrequenz oberhalb der Nennfrequenz liegt.

8. Verfahren nach einem der vorhergehenden Ansprüche, **dadurch gekennzeichnet, dass**
das Verfahren ein wiederholtes Aussenden des wenigstens einen ersten Ultraschallpulses und/oder des wenigstens einen zweiten Ultraschallpulses sowie ein wiederholtes Empfangen des wenigstens einen ersten Echosignals und/oder des wenigstens eines zweiten Echosignals umfasst, und
das Ermitteln eines Verhältnisses (44) von Echoamplituden des Referenzobjekts in dem wenigstens einen ersten und zweiten Echosignal das Ermitteln des Verhältnisses (44) der Echoamplituden des Referenzobjekts basierend auf einer Mehrzahl erster und zweiter Echosignale umfasst.

9. Verfahren nach einem der vorhergehenden Ansprüche, **dadurch gekennzeichnet, dass**
das Verfahren einen Schritt zum Ermitteln einer Position des Referenzobjekts in dem Erfassungsbereich (40) des Ultraschallsensors (10) umfasst, und
das Ausgeben einer fehlerhaften Positionierung des Ultraschallsensors (10) erfolgt, wenn das Verhältnis (44) der Echoamplituden des Referenzobjekts in dem wenigstens einen ersten und zweiten Echosignal um wenigstens einen vorgegebenen Grenzwert von dem Verhältnis (44) für eine korrekte Positionierung des Ultraschallsensors (10), das abhängig von der Position des Referenzobjekts in dem Erfassungsbereich (40) des Ultraschallsensors (10) ist, abweicht.

10. Verfahren nach einem der vorhergehenden Ansprüche, **dadurch gekennzeichnet, dass**
das Verfahren einen Schritt zum Ermitteln einer Position des Referenzobjekts in dem Erfassungsbereich des Ultraschallsensors (10) umfasst, und
das Ausgeben einer fehlerhaften Positionierung des Ultraschallsensors (10) erfolgt, wenn das Verhältnis (44) der Echoamplituden des Referenzobjekts in dem wenigstens einen ersten und zweiten Echosignal um wenigstens einen vorgegebenen Grenzwert, der abhängig von der Position des Referenzobjekts in dem Erfassungsbereich (40) des Ultraschallsensors (10) ist, von dem Verhältnis (44) für eine korrekte Positionierung des Ultraschallsensors (10) abweicht.

11. Sensoranordnung (30) mit wenigstens einem Ultraschallsensor (10) und einer Steuerungseinheit (32), die über eine Datenverbindung (34) mit dem wenigstens einen Ultraschallsensor (10) verbunden ist, wobei der wenigstens eine Ultraschallsensor (10) in einer Halterung (20) an einem Fahrzeug (10) montiert ist,
**dadurch gekennzeichnet, dass**
die Sensoranordnung (30) ausgeführt ist, das Verfahren zum Überprüfen einer Positionierung des Ultraschallsensors (10) an dem Fahrzeug (10) nach einem der Ansprüche 1 bis 10 durchzuführen.

## Claims

1. Method for checking the positioning of an ultrasonic sensor (10) on a vehicle (36), wherein the ultrasonic sensor (10) is installed in a mounting bracket (20) on the vehicle (36), said method comprising the steps localizing a reference object in the detection region (40) of the ultrasonic sensor (10),
emitting at least one first ultrasonic pulse with a first ultrasonic frequency by means of the ultrasonic sensor (10),
receiving at least one first echo signal at the first ultrasonic frequency by means of the ultrasonic sensor (10),
emitting at least one second ultrasonic pulse with a second ultrasonic frequency by means of the ultrasonic sensor (10),
receiving at least one second echo signal at the second ultrasonic frequency by means of the ultrasonic sensor (10),
ascertaining a ratio (44) of echo amplitudes of the reference object in the at least one first and second echo signal, and
outputting an error in the positioning of the ultrasonic sensor (10) if the ratio (44) of the echo amplitudes of the reference object in the at least one first and second echo signal deviates from a ratio (44) for the correct positioning of the ultrasonic sensor (10) by at least one specified threshold value.

2. Method according to Claim 1, **characterized in that** the localizing of a reference object in the detection region (40) of the ultrasonic sensor (10) comprises detecting a position of the reference object in the detection region (40) of the ultrasonic sensor (10) based on echo signals received using a plurality of ultrasonic sensors (10).

3. Method according to Claim 1, **characterized in that** the localizing of a reference object in the detection region (40) of the ultrasonic sensor (10) comprises emitting at least one focused ultrasonic pulse by means of the ultrasonic sensor (10) having a narrow detection region (40) and receiving at least one corresponding echo signal by means of the ultrasonic sensor (10), wherein the reference object is localized by finding an echo of the reference object contained in the at least one received echo signal in the detection region (40) of the ultrasonic sensor (10).

4. Method according to Claim 1, **characterized in that** the localizing of a reference object in the detection region (40) of the ultrasonic sensor (10) comprises detecting a position of the reference object in the detection region (40) of the ultrasonic sensor (10) based on a detection of the surroundings using at least one environment sensor from an optical camera, a LiDAR-based environment sensor and a radar sensor.

5. Method according to one of the preceding claims,
**characterized in that**
the method comprises an additional step for positioning the reference object in a central region of the detection region (40) of the ultrasonic sensor (10).

6. Method according to one of the preceding claims,
**characterized in that**
the first ultrasonic frequency is in a frequency range below a nominal frequency of the ultrasonic sensor (10), and the second ultrasonic frequency is above the first ultrasonic frequency, or
the second ultrasonic frequency is in a frequency range below a nominal frequency of the ultrasonic sensor (1), and the first ultrasonic frequency is above the second ultrasonic frequency.

7. Method according to one of Claims 1 to 5,
**characterized in that**
the first ultrasonic frequency is in a frequency range below a nominal frequency of the ultrasonic sensor (10), and the second ultrasonic frequency is above the nominal frequency, or
the second ultrasonic frequency is in a frequency range below a nominal frequency of the ultrasonic sensor (1), and the first ultrasonic frequency is above the nominal frequency.

8. Method according to one of the preceding claims,
**characterized in that**
the method comprises repeatedly emitting the at least one first ultrasonic pulse and/or the at least one second ultrasonic pulse and repeatedly receiving the at least one first echo signal and/or the at least one second echo signal, and
ascertaining a ratio (44) of echo amplitudes of the reference object in the at least one first and second echo signal comprises ascertaining the ratio (44) of the echo amplitudes of the reference object based on a plurality of first and second echo signals.

9. Method according to one of the preceding claims,
**characterized in that**
the method comprises a step for determining a position of the reference object in the detection region (40) of the ultrasonic sensor (10), and
an error in the positioning of the ultrasonic sensor (10) is output if the ratio (44) of the echo amplitudes of the reference object in the at least one first and second echo signal deviates by at least one specified threshold value from the ratio (44) for the correct positioning of the ultrasonic sensor (10), which is dependent on the position of the reference object in the detection region (40) of the ultrasonic sensor (10).

10. Method according to one of the preceding claims,
**characterized in that**
the method comprises a step for determining a position of the reference object in the detection region of the ultrasonic sensor (10), and
an error in the positioning of the ultrasonic sensor (10) is output if the ratio (44) of the echo amplitudes of the reference object in the at least one first and second echo signal deviates from the ratio (44) for the correct positioning of the ultrasonic sensor (10) by at least one specified threshold value, which is dependent on the position of the reference object in the detection region (40) of the ultrasonic sensor (10).

11. Sensor assembly (30) having at least one ultrasonic sensor (10) and a control unit (32), which is connected via a data link (34) to the at least one ultrasonic sensor (10), wherein the at least one ultrasonic sensor (10) is installed in a mounting bracket (20) on a vehicle (10),
**characterized in that**
the sensor assembly (30) is designed to carry out the method for checking the positioning of the ultrasonic sensor (10) on the vehicle (10) according to one of Claims 1 to 10.

## Revendications

1. Procédé pour vérifier un positionnement d'un capteur à ultrasons (10) sur un véhicule (36), le capteur à ultrasons (10) étant monté sur le véhicule (36) dans un support (20), comprenant les étapes suivantes localiser un objet de référence dans la zone de détection (40) du capteur à ultrasons (10),
émettre au moins une première impulsion ultrasonore avec le capteur à ultrasons (10) à une première fréquence d'ultrasons,
recevoir au moins un premier signal d'écho avec le capteur à ultrasons (10) à la première fréquence d'ultrasons,
émettre au moins une deuxième impulsion ultrasonore avec le capteur à ultrasons (10) à une deuxième fréquence d'ultrasons,
recevoir au moins un deuxième signal d'écho avec le capteur à ultrasons (10) à la deuxième fréquence d'ultrasons,
déterminer un rapport (44) des amplitudes d'écho de l'objet de référence dans ledit premier et ledit deuxième signaux d'écho, et
émettre un positionnement incorrect du capteur à ultrasons (10) si le rapport (44) des amplitudes d'écho de l'objet de référence dans lesdits premier et deuxième signaux d'écho s'écarte d'au moins une valeur limite prédéfinie d'un rapport (44) pour un positionnement correct du capteur à ultrasons (10).

2. Procédé selon la revendication 1, **caractérisé en ce que**
la localisation d'un objet de référence dans la zone de détection (40) du capteur à ultrasons (10) comprend le fait de détecter une position de l'objet de référence dans la zone de détection (40) du capteur à ultrasons (10) sur la base de signaux d'écho reçus par une pluralité de capteurs à ultrasons (10).

3. Procédé selon la revendication 1, **caractérisé en ce que**
la localisation d'un objet de référence dans la zone de détection (40) du capteur à ultrasons (10) comprend le fait d'émettre au moins une impulsion ultrasonore focalisée avec le capteur à ultrasons (10) ayant une zone de détection étroite (40) et le fait, par le capteur à ultrasons (10), de recevoir au moins un signal d'écho correspondant, l'objet de référence étant localisé par la détection d'un écho de l'objet de référence contenu dans ledit au moins un signal d'écho reçu dans la zone de détection (40) du capteur à ultrasons (10).

4. Procédé selon la revendication 1, **caractérisé en ce que**
la localisation d'un objet de référence dans la zone de détection (40) du capteur à ultrasons (10) comprend le fait de détecter une position de l'objet de référence dans la zone de détection (40) du capteur à ultrasons (10) sur la base d'une détection de l'environnement en utilisant au moins un capteur d'environnement parmi une caméra optique, un capteur d'environnement basé sur un LiDAR et un capteur radar.

5. Procédé selon l'une des revendications précédentes,
**caractérisé en ce que**
le procédé comprend une étape supplémentaire de positionnement de l'objet de référence dans une zone centrale de la zone de détection (40) du capteur à ultrasons (10).

6. Procédé selon l'une des revendications précédentes,
**caractérisé en ce que**
la première fréquence d'ultrasons se situe dans une gamme de fréquences inférieure à une fréquence nominale du capteur à ultrasons (10), et la deuxième fréquence d'ultrasons se situe au-dessus de la première fréquence d'ultrasons, ou
la deuxième fréquence d'ultrasons se situe dans une gamme de fréquences inférieure à une fréquence nominale du capteur à ultrasons (1), et la première fréquence d'ultrasons se situe au-dessus de la deuxième fréquence d'ultrasons.

7. Procédé selon l'une des revendications 1 à 5,
**caractérisé en ce que**
la première fréquence d'ultrasons se situe dans une gamme de fréquences inférieure à une fréquence nominale du capteur à ultrasons (10), et la deuxième fréquence d'ultrasons se situe au-dessus de la fréquence nominale, ou
la deuxième fréquence d'ultrasons se situe dans une gamme de fréquences inférieure à une fréquence nominale du capteur à ultrasons (1) et la première fréquence d'ultrasons se situe au-dessus de la fréquence nominale.

8. Procédé selon l'une des revendications précédentes,
**caractérisé en ce que**
le procédé comprend l'émission répétée d'au moins une première impulsion ultrasonore et/ou d'au moins une deuxième impulsion ultrasonore ainsi que la réception répétée d'au moins un premier signal d'écho et/ou d'au moins un deuxième signal d'écho, et
la détermination d'un rapport (44) des amplitudes d'écho de l'objet de référence dans lesdits premier et deuxième signaux d'écho comprend la détermination du rapport (44) des amplitudes d'écho de l'objet de référence sur la base d'une pluralité de premiers et deuxièmes signaux d'écho.

9. Procédé selon l'une des revendications précédentes,
**caractérisé en ce que**
le procédé comprend une étape de détermination de la position de l'objet de référence dans la zone de détection (40) du capteur à ultrasons (10), et
une émission d'un signal de positionnement incorrect du capteur à ultrasons (10) se produit lorsque le rapport (44) des amplitudes d'écho de l'objet de référence dans lesdits au moins un premier et deuxième signaux d'écho s'écarte d'au moins une valeur limite prédéfinie du rapport (44) pour un positionnement correct du capteur à ultrasons (10), qui dépend de la position de l'objet de référence dans la zone de détection (40) du capteur à ultrasons (10).

10. Procédé selon l'une des revendications précédentes,
**caractérisé en ce que**
le procédé comprend une étape de détermination d'une position de l'objet de référence dans la zone de détection du capteur à ultrasons (10), et
une émission d'un positionnement incorrect du capteur à ultrasons (10) se produit lorsque le rapport (44) des amplitudes d'écho de l'objet de référence dans lesdits au moins un premier et deuxième signaux d'écho s'écarte dudit rapport (44) pour un positionnement correct du capteur à ultrasons (10) d'au moins une valeur limite prédéfinie qui dépend de la position de l'objet de référence dans la zone de détection (40) du capteur à ultrasons (10).

11. Agencement de détection (30) comprenant au moins un capteur à ultrasons (10) et une unité de commande (32) qui est reliée par une liaison de données (34) audit au moins un capteur à ultrasons (10), ledit au moins un capteur à ultrasons (10) étant monté dans un support (20) sur un véhicule (10),
**caractérisé en ce que**
le dispositif de détection (30) est conçu pour mettre en œuvre le procédé de vérification du positionnement du capteur à ultrasons (10) sur le véhicule (10) selon l'une des revendications 1 à 10.
